# EUROPEAN PATENT APPLICATION

(11) **EP 4 243 168 A1**
(43) Date of publication of application: **13.09.2023**
(21) Application number: 21889407.9
(22) Date of filing: 13.10.2021
(51) Int. Cl.: H01M 50/172, H01M 50/572, H01M 50/342, H01M 50/152

(54) **CYLINDRICAL SECONDARY BATTERY**

(30) Priority: 03.11.2020 KR 20200145314
(71) Applicant: Samsung SDI Co., Ltd., Yongin-si, Gyeonggi-do 17084 (KR)
(72) Inventor: KIM, Dae Kyu, Yongin-si, Gyeonggi-do 17084 (KR); PARK, Jong Jun, Yongin-si, Gyeonggi-do 17084 (KR)
(74) Representative: Marks & Clerk LLP
(86) International application number: PCT/KR2021/014135
(87) International publication number: WO 2022/097942

(57) **Abstract**

An embodiment of the present invention relates to a cylindrical secondary battery, comprising: a cylindrical can; an electrode assembly accommodated in the cylindrical can; and a cap assembly. The cap assembly comprises: a cap-up; a cap-down disposed under the cap-up; a vent plate disposed between the cap-up and the cap-down, spaced apart from the cap-down and having at least one notch; and an insulator inserted between the vent plate and the cap-down to insulate the vent plate and the cap-down from each other, wherein the insulator is formed through an injection process, an assembly process, and a cross-linking process, sequentially.

According to an embodiment of the present invention, when the insulator is provided in the cap assembly, since the cross-linking process is performed after fusion, the insulator can be stably coupled to the cap assembly. In addition, since, due to the cross-linking process, the insulator does not melt even in a high-temperature environment, the insulator can maintain the insulating function thereof even in a high-temperature environment.

## Description

### TECHNICAL FIELD

An embodiment of the present invention relates to a cylindrical secondary battery capable of maintaining an insulating function even in a high-temperature environment.

### BACKGROUND ART

In general, a cylindrical secondary battery includes a cylindrical electrode assembly, a cylindrical can accommodating the electrode assembly and electrolyte, and a cap assembly coupled to a top opening of the can to seal the can and allow current generated in the electrode assembly to flow to an external device.

The cap assembly may include a cap-up, a vent plate, a cap-down, and an insulator for insulation between the vent plate and the cap-down. In the event of a short circuit due to the rupture of the vent plate, the insulator must be able to maintain the insulating function thereof. However, in a high-temperature environment, when the vent plate is ruptured, the center of the vent plate may be deformed to block current, but there may be a problem that the insulator melts and re-energization occurs.

The above information disclosed in this Background section is only for enhancement of understanding of the background of the invention and therefore it may contain information that does not constitute prior art.

### DESCRIPTION OF EMBODIMENTS

### TECHNICAL PROBLEM

An object of the present invention is to provide a cylindrical secondary battery capable of maintaining an insulating function even in a high-temperature environment.

### TECHNICAL SOLUTION

A cylindrical secondary battery according to an embodiment of the present invention may include: a cylindrical can; an electrode assembly accommodated in the cylindrical can; and a cap assembly comprising a cap-up, a cap-down disposed under the cap-up, a vent plate disposed between the cap-up and the cap-down, spaced apart from the cap-down and having at least one notch, and an insulator inserted between the vent plate and the cap-down to insulate the vent plate and the cap-down from each other, wherein the insulator is formed through an injection process, an assembly process, and a cross-linking process, sequentially.

The assembly process may be a process in which the insulator is inserted between the vent plate and the cap-down and is then heat-sealed.

The cross-linking process may be a process in which the heat-sealed insulator is cross-linked.

A cross-linking treatment method used in the cross-linking process may vary depending on the material of the insulator.

The insulator may be made of an insulating material including polyethylene (PE), polypropylene (PP), polystyrene (PS), and ethylene-vinyl acetate copolymer (EVA).

When the insulator is made of any one of polyethylene (PE) and polypropylene (PP) materials, radiation irradiation or chemical cross-linking may be applied as the cross-linking treatment method.

When the insulator is made of any one of polystyrene (PS) and ethylene vinyl acetate copolymer (EVA), a chemical cross-linking method may be applied as the cross-linking treatment method.

In addition, the present invention provides a cap assembly comprising: a cap-up disposed in an opening of a cylindrical can in which an electrode assembly is accommodated; a cap-down disposed below the cap-up; a vent plate disposed between the cap-up and the cap-down, and having at least one notch formed therein; and an insulator inserted between the vent plate and the cap-down to insulate the vent plate and the cap-down from each other, wherein the insulator is formed through an injection process, an assembly process, and a cross-linking process, sequentially.

The assembly process may be a process in which the insulator is inserted between the vent plate and the cap-down and is then heat-sealed.

The cross-linking process may be a process in which the heat-sealed insulator is cross-linked.

A cross-linking treatment method used in the cross-linking process may vary depending on the material of the insulator.

The insulator may be made of an insulating material including polyethylene (PE), polypropylene (PP), polystyrene (PS), and ethylene-vinyl acetate copolymer (EVA).

When the insulator is made of any one of polyethylene (PE) and polypropylene (PP) materials, radiation irradiation or chemical cross-linking may be applied as the cross-linking treatment method.

When the insulator is made of any one of polystyrene (PS) and ethylene vinyl acetate copolymer (EVA), a chemical cross-linking method may be applied as the cross-linking treatment method.

### ADVANTAGEOUS EFFECTS

According to an embodiment of the present invention, when an insulator is provided in a cap assembly, a cross-linking process is performed after the insulator is injected and fused to the cap assembly, and thus, the insulator can be stably coupled to the cap assembly. In addition, due to the cross-linking process, the insulator does not melt even in a high-temperature environment. Therefore, since the insulator can maintain an insulating function even in a high-temperature environment, there is an effect of preventing re-energization due to melting of the insulator.

### BRIEF DESCRIPTION OF DRAWINGS

FIG. 1 is a longitudinal cross-sectional view illustrating a cylindrical secondary battery according to an embodiment of the present invention.
FIG. 2 is a longitudinal cross-sectional view illustrating a cap assembly according to FIG. 1.
FIG. 3 is a schematic diagram illustrating the sequence of applying the insulator of FIG. 2 to a cap assembly.
FIG. 4 is a longitudinal cross-sectional view illustrating a vent-ruptured state of the cap assembly according to FIG. 3 under a high-temperature condition.

### BEST MODE FOR CARRYING OUT THE INVENTION

Examples of the present invention are provided to more completely explain the present invention to those skilled in the art, and the following examples may be modified in various other forms. The present invention, however, may be embodied in many different forms and should not be construed as being limited to the example (or exemplary) embodiments set forth herein. Rather, these example embodiments are provided so that this invention will be thorough and complete and will convey the aspects and features of the present invention to those skilled in the art.

In addition, in the accompanying drawings, sizes or thicknesses of various components are exaggerated for brevity and clarity, and like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the invention. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present invention.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

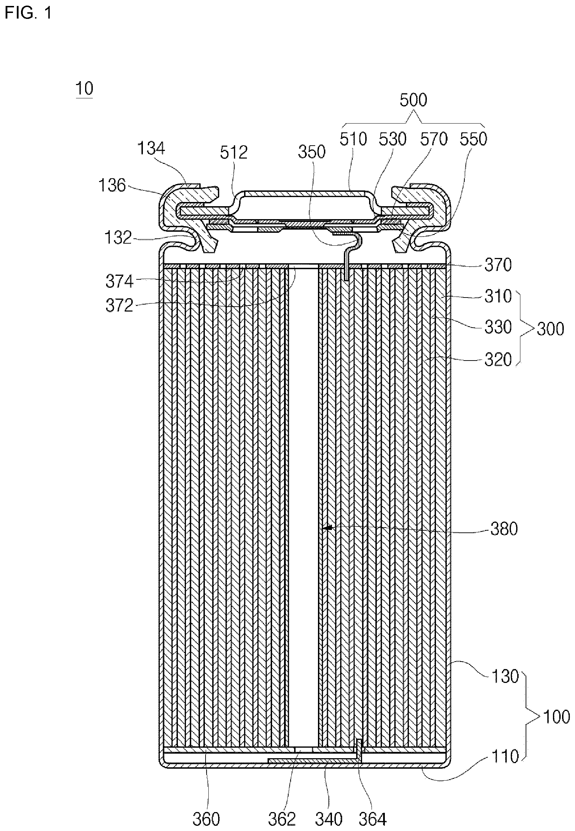

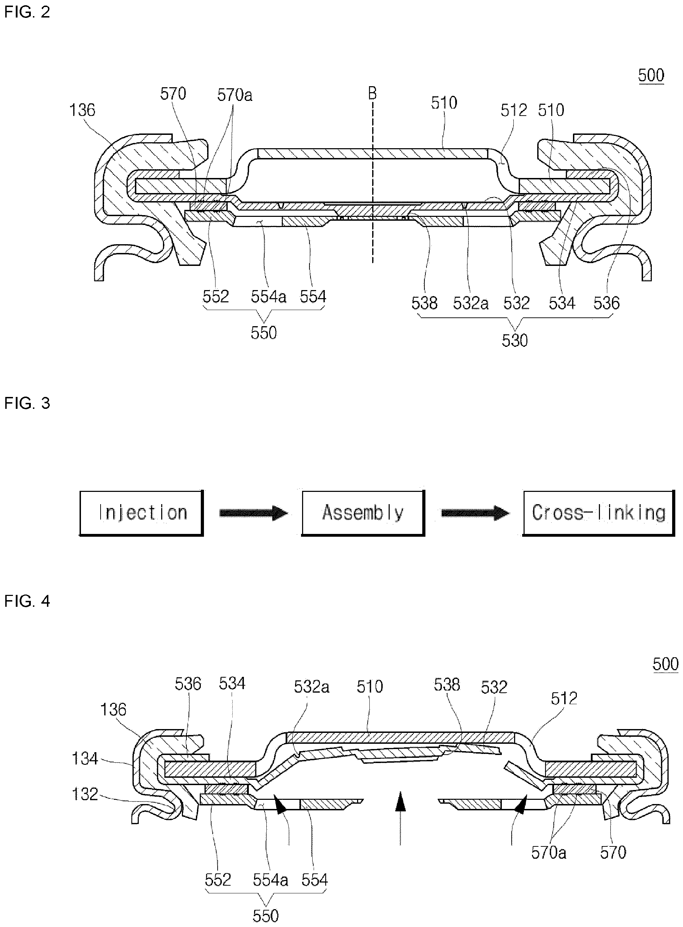

FIG. 1 is a longitudinal cross-sectional view illustrating a cylindrical secondary battery according to an embodiment of the present invention. FIG. 2 is a longitudinal cross-sectional view illustrating a cap assembly according to FIG. 1.

As shown in FIG. 1, the cylindrical secondary battery 10 according to the first embodiment of the present invention may include a cylindrical can 100, an electrode assembly 300 inserted into the can 100, a cap assembly 500 inserted into one end of the can 100, and an insulating gasket 700 inserted between the can 100 and the cap assembly 500. A center pin 380 may be coupled to the electrode assembly 300.

The can 100 may include a circular bottom portion 110 and a side portion 130 extending upward from the bottom portion 110, and the upper portion of the side portion 130 is open (hereinafter referred to as an opening). In the manufacturing process of the secondary battery 10, the electrode assembly 300 is inserted into the can 100 together with an electrolyte through the opening of the can 100. The can 100 may be made of steel, a steel alloy, nickel-plated steel, a nickel-plated steel alloy, aluminum, an aluminum alloy, or an equivalent thereof, but the material is not limited thereto.

The cap assembly 500 is inserted into the opening of the can 100. A beading part 132 and a crimping part 134 may be formed on the side portion 130 to prevent the inserted cap assembly 500 from escaping to the outside through the opening of the can 100.

The beading part 132 is formed below the cap assembly 500 and is recessed toward the inside of the can 100. The crimping part 134 is formed above the cap assembly 500 and is bent toward the inside of the can 100. Since the beading part 132 and the crimping part 134 hold the cap assembly 500 in the vertical direction, the cap assembly 500 is not separated from the can 100. The electrode assembly 300 is disposed below the cap assembly 500 inside the can 100.

The electrode assembly 300 may include a negative electrode plate 310 coated with a negative electrode active material (e.g., graphite, carbon, etc.), a positive electrode plate 320 coated with a positive electrode active material (e.g., a transition metal oxide (LiCoO2, LiNiO2, LiMn204, etc.)), and a separator 330 disposed between the negative electrode plate 310 and the positive electrode plate 320 to prevent a short circuit and to allow only the movement of lithium ions. The negative electrode plate 310, the positive electrode plate 320, and the separator 330 may be wound in a substantially cylindrical shape and accommodated in the can 100. The negative electrode plate 310 may be a copper (Cu) or nickel (Ni) foil, the positive electrode plate 320 may be an aluminum (Al) foil, and the separator 330 may be polyethylene (PE) or polypropylene (PP), but the present invention does not limit the materials thereto. A negative electrode tab 340 protruding and extending a certain length downward may be welded to the negative electrode plate 310, and a positive electrode tab 350 protruding upward a certain length may be welded to the positive electrode plate 320, but the reverse is also possible. The negative electrode tab 340 may be made of copper or nickel, and the positive electrode tab 350 may be made of aluminum, but the above materials are not limited in the present invention. The negative electrode tab 340 may be welded to the bottom portion 110 of the can 100, and in this case, the can 100 may operate as a negative electrode. Conversely, the positive electrode tab 350 may be welded to the bottom portion 111 of the can 100, and in this case, the can 100 may operate as a positive electrode.

In addition, a first insulating plate 360 and a second insulating plate 370 may be interposed above and below the electrode assembly 300. The first insulating plate 360 prevents the positive electrode plate 320 from electrically contacting the bottom portion 110 of the can 100, and the second insulating plate 370 prevents the negative electrode plate 310 from electrically contacting the cap assembly 500.

The first insulating plate 360 may have a first hole 362 and a second hole 364 formed to pass therethrough, the first hole 362 communicating with the center pin 380 to allow gas to move upward through the cylindrical center pin 380 when a large amount of gas is generated due to abnormality of secondary battery, and the second hole 364 allowing the negative electrode tab 340 to pass therethrough. The negative electrode tab 340 may be welded to the bottom portion 110 through the second hole 364.

The second insulating plate 370 may have a first hole 372 and a second hole 374 formed to pass therethrough , the first hole 372 allowing gas to move to the cap assembly 500 when a large amount of gas is generated due to abnormality of secondary battery, and the second hole 364 allowing the positive electrode tab 350 to pass therethrough. The positive electrode tab 350 may be welded to the cap-down 550 to be described later through the second hole 374. The second hole 374 may include a plurality of second holes formed to serve as inlets through which an electrolyte is injected into the electrode assembly 300 in an electrolyte injection process.

The center pin 380 is shaped of a hollow circular pipe and may be coupled to the center of the electrode assembly 300. The center pin 380 may be made of steel, a steel alloy, nickel-plated steel, a nickel-plated steel alloy, aluminum, an aluminum alloy, or polybutylene terepthalate, but the material herein is not limited thereto. The center pin 380 serves to suppress deformation of the electrode assembly 300 during charging and discharging of the secondary battery and serves as a passage for gas generated inside the secondary battery. In some cases, the center pin 380 may be omitted.

Meanwhile, as shown in FIGS. 1 and 2, the cap assembly 500 may include a cap-up 510 exposed to the outside of the can 100, a cap-down 550 disposed below the cap-up 510, a vent plate 530 disposed between the cap-up 510 and the cap-down 550, and an insulator 570 disposed between the vent plate 530 and the cap-down 550. In FIGS. 2 and 3, on the basis of an imaginary central axis B along the length direction of the can 100, the direction toward the central axis B is defined as an inward direction, and the direction away from the central axis B is defined as an outward direction.

As shown in FIG. 2, the cap-up 510 is disposed at the top of the cap assembly 500 and may include a through hole 512 through which gas generated inside the can 100 is discharged to the outside. The cap-up 510 may be shaped of a substantially circular plate, and a predetermined region may be convexly formed to protrude upward with respect to the central axis B, and the through hole 512 may be formed in a protruding portion. The vent plate 530 is disposed under the cap-up 510, and the vent plate 530 may be coupled such that an edge of the cap-up 510 is surrounded.

As shown in FIG. 2, the vent plate 530 is shaped of a substantially circular plate, and the edge thereof is bent toward the edge of the cap-up 510 to be in contact with the lower edge of the cap-up 510. The vent plate 530 may be bent again toward the inside of the can 100 with respect to a portion of the vent plate 530 being in contact with the cap-up 510, to then be in contact with an upper portion of the edge of the cap-up 510. A circular plate portion of the vent plate 530, which is not bent, is defined as a vent bottom portion 532, a portion that is bent from the vent bottom portion 532 toward the cap-up 510 is defined as a first support portion 534, and a portion that is bent inward from the first support portion 534 is defined as a second support portion 536. A portion that protrudes convexly downward from the vent bottom portion 532 and is in contact with the cap-down 550 is defined as a contact portion 538. The vent plate 530 is formed such that all areas except for the contact portion 538 do not come into contact with the cap-down 550. At least one notch 532a may be formed on the vent bottom portion 532 of the vent plate 530.

For example, the notch 532a may be formed in a circular ring shape. Alternatively, the notch 532a may include a plurality of notches formed in a streamlined shape so that the plurality of notches are arranged in a substantially circular shape. When the gas pressure inside the can 100 is greater than a predetermined rupture pressure due to overcharging, etc., the notch 532a is ruptured as the vent plate 530 is inverted upward, and thus, the gas inside the can 100 may be quickly discharged to the outside through the through hole 512 of the cap-up 510.

As shown in FIG. 2, the cap-down 550 is disposed under the vent plate 530 and has a substantially circular plate shape. For example, the cap-down 550 may be made of aluminum, an aluminum alloy, or an equivalent thereof, but the material herein is not limited thereto. The cap-down 550 supports the cap-up 510 and serves to prevent deformation of the cap-up 510 from an external force. The edge of the cap-down 550 is bent toward the vent plate 530, and the insulator 570 is disposed at the bent portion. A portion bent toward the vent plate 530 is defined as a third support portion 552. A circular plate portion of the cap-down 550, which is not bent, is defined as a cap-down bottom portion 554, and the cap-down bottom portion 554 may be formed to have a predetermined separation distance from the vent bottom portion 532 of the vent plate 530. However, a substantially central portion of the cap-down bottom portion 554 is in contact with the contact portion 538 of the vent plate 530. In the cap-down 550, a through hole 554a may also be formed in the cap-down bottom portion 554, and when an abnormal internal pressure occurs, the internal gas may be discharged to the outside through the notch 532a of the vent plate 530 and the through-hole 512 of the cap-up 510 via the through hole 554a of the cap-down 550.

As shown in FIG. 2, the insulator 570 allows the vent plate 530 and the cap-down 550 to maintain a spaced-apart state except for the contact portion 538, and serves to insulate the vent plate 530 and the cap-down 550 from each other. Accordingly, when viewed from above, the insulator 570 may be formed in a circular ring shape having a certain width. For example, the insulator 570 may be made of polyethylene (PE), polypropylene (PP), polystyrene (PS), ethylene-vinyl acetate copolymer (EVA), or an equivalent thereof, but is not limited thereto. The insulator 570 may be coupled to the vent plate 530 and the cap-down 550 by ultrasonic welding, laser welding, welding, or the like.

In the cylindrical secondary battery having the above-described configuration, a process of manufacturing the insulator and applying the same to the cap assembly will be described in more detail.

FIG. 3 is a schematic diagram illustrating the sequence of applying the insulator of FIG. 2 to a cap assembly. FIG. 4 is a longitudinal cross-sectional view illustrating a vent-ruptured state of the cap assembly according to FIG. 3 under a high-temperature condition.

Generally, an insulator is applied to the cap assembly 500 by injection molding of the above-described material and then subjecting to welding or thermal fusion. In the case of thermal fusion, the thermal fusion is performed at a temperature of 260 to 270 degrees Celsius, which is higher than the melting point of the insulator 570 made of the above-described material. Therefore, as the contact surface of the insulator 570 in contact with the vent plate 530 and the cap-down 550 is melted, the insulator 570 is assembled to the vent plate 530 and the cap-down 550.

Although differing for each material, the materials of the insulator 570 are melted in the ranges of 105 to 110 degrees for PE, 165 to 170 degrees for PP, 74 to 105 degrees for PS, and 60 to 100 degrees for EVA (all temperatures are based on Celsius). Therefore, in a high-temperature operating environment, the insulator 570 may be melted and the insulation function may not be properly maintained. In particular, as shown in FIG. 4, when the vent plate 530 is broken and the central portion rises toward the cap-up 510, the insulator 570 is relatively pressed. Here, even if the current is cut off due to the breakage of the vent plate 530, when the insulator 570 is melted, there is a problem in that electricity is re-energized in a portion of the insulator 570. In order to solve this problem, the present invention proposes a method of improving thermal characteristics of the insulator 570, which is vulnerable to high temperatures, by applying a cross-linking process to the insulator 570.

As shown in FIG. 3, the insulator 570 may be made through injecting into a required shape (injection process) - assembling and fusing into the cap assembly 500 (insertion between vent plate and cap-down and assembly process) - a cross-link process.

In general, a cross-link process refers to a process of connecting linear molecular chains of a material having linear molecular chains. Materials that have undergone cross-linking have greatly improved mechanical and thermal properties, and exhibit the characteristic of increasing melting points.

The cross-linking method can be classified into a radiation irradiation method (electron beam cross-linking method), a water cross-linking method, and a chemical cross-linking method. The radiation irradiation method is a method of irradiating electron beams and gamma rays to a material to be cross-linked, and is used for cross-linking a thin material such as a film or a thin film because there is a limit to the thickness of cross-linking. The water cross-linking method is a method of cross-linking by infiltrating water from the outside through a catalyst after extruding a material by mixing a specific compound such as a silane compound. The chemical cross-link method is a method of cross-linking under high temperature and high pressure after extrusion using a compound in which a target material and a cross-linking agent are mixed at 1-3%. A material for making the insulator 570 may be cross-linked mainly by a radiation irradiation method or a chemical cross-linking method. For example, materials that can be cross-linked by irradiation include polyethylene (PE) and polypropylene (PP). For example, the material that can be cross-linked by the chemical cross-linking method may include polyethylene (PE), polypropylene (PP), polystyrene (PS), and ethylene-vinyl acetate copolymer (EVA).

For example, yet-to-be-crosslinked polypropylene (PP) melts at 165 to 170 degrees Celsius, but cross-linked polypropylene has a thermal property that does not melt even at 400 degrees Celsius. Therefore, in the present invention, the insulator 570 is manufactured through a cross-linking process so as to prevent the insulator 570 from melting even in a high temperature environment and maintain power-saving performance. However, insulators made of cross-linked polypropylene do not melt at 260 to 270 degrees Celsius, which is a general heat welding temperature. Accordingly, when the insulator 570 that has undergone the cross-linking process is assembled to the cap assembly 500, the insulator 570 may move or separate between the vent plate 530 and the cap-down 550.

In order to prevent this problem, the insulator 570 may be formed in the order of injection process-assembly process-cross-linking process, as shown in FIG. 3, rather than in the order of injection process-cross-linking process-assembly process. That is, the shape of the insulator 570 is manufactured through an injection process, and the insulator 570 is inserted between the vent plate 530 and the cap-down 550 in an assembly process, and then fused. The fusion temperature may be higher than the melting point of the material of the insulator 570. Thereafter, the insulator 570 is cross-linked through a cross-linking process. The insulator 570 that has gone through the cross-linking process has been cross-linked after being fused to the cap assembly 500, and thus can maintain insulation performance without melting even in a high temperature environment.

In addition, even when pressure is applied in a high-temperature environment, the insulator 570 of the present invention may maintain insulation performance. As shown in FIG. 4, in a high-temperature operating environment, the pressure inside the secondary battery 10 may exceed a certain pressure, so that the vent plate 530 may be ruptured. When the notch 532a of the vent plate 530 is ruptured, a ruptured portion may rise toward the cap-up 510 by gas pressure. Here, since the non-ruptured portion of the vent plate 530 is relatively pressed, pressure is applied to the insulator 570. When pressure is applied at high temperatures, general insulators melt more quickly than in a high-temperature environment. However, the insulator 570 of the present invention, which has undergone the cross-linking process, does not melt and maintains the shape thereof even when pressure is applied in a high-temperature environment. That is, even after a short circuit occurs, the insulator 570 does not melt and maintains insulation performance.

What has been described above is only one embodiment for carrying out the present invention, and the present invention is not limited to the above-described embodiment. However, the technical spirit of the present invention lies in that anyone skilled in the art could make various changes, as claimed in the claims below, without departing from the gist of the present invention.

### INDUSTRIAL APPLICABILITY

The present invention can be applied to various industrial fields including cylindrical secondary batteries, and electronic devices and vehicles equipped therewith.

## Claims

1. A cylindrical secondary battery comprising:
a cylindrical can;
an electrode assembly accommodated in the cylindrical can; and
a cap assembly comprising a cap-up, a cap-down disposed under the cap-up, a vent plate disposed between the cap-up and the cap-down, spaced apart from the cap-down and having at least one notch, and an insulator inserted between the vent plate and the cap-down to insulate the vent plate and the cap-down from each other,
wherein the insulator is formed through an injection process, an assembly process, and a cross-linking process, sequentially.

2. The cylindrical secondary battery of claim 1, wherein the assembly process is a process in which the insulator is inserted between the vent plate and the cap-down and is then heat-sealed.

3. The cylindrical secondary battery of claim 2, wherein the cross-linking process is a process in which the heat-sealed insulator is cross-linked.

4. The cylindrical secondary battery of claim 3, wherein a cross-linking treatment method used in the cross-linking process varies depending on the material of the insulator.

5. The cylindrical secondary battery of claim 4, wherein the insulator is made of an insulating material including polyethylene (PE), polypropylene (PP), polystyrene (PS), and ethylene-vinyl acetate copolymer (EVA).

6. The cylindrical secondary battery of claim 5, wherein when the insulator is made of any one of polyethylene (PE) and polypropylene (PP) materials, radiation irradiation or chemical cross-linking is applied as the cross-linking method.

7. The cylindrical secondary battery of claim 5, wherein when the insulator is made of any one of polystyrene (PS) and ethylene vinyl acetate copolymer (EVA), a chemical cross-linking method is applied as the cross-linking treatment method.

8. A cap assembly comprising:
a cap-up disposed in an opening of a cylindrical can in which an electrode assembly is accommodated;
a cap-down disposed below the cap-up;
a vent plate disposed between the cap-up and the cap-down, and having at least one notch formed therein; and
an insulator inserted between the vent plate and the cap-down to insulate the vent plate and the cap-down from each other,
wherein the insulator is formed through an injection process, an assembly process, and a cross-linking process, sequentially.

9. The cap assembly of claim 8, wherein the assembly process is a process in which the insulator is inserted between the vent plate and the cap-down and is then heat-sealed.

10. The cap assembly of claim 9, wherein the cross-linking process is a process in which the heat-sealed insulator is cross-linked.

11. The cap assembly of claim 10, wherein a cross-linking treatment method used in the cross-linking process varies depending on the material of the insulator.

12. The cap assembly of claim 11, wherein the insulator is made of an insulating material including polyethylene (PE), polypropylene (PP), polystyrene (PS), and ethylene-vinyl acetate copolymer (EVA).

13. The cap assembly of claim 12, wherein when the insulator is made of any one of polyethylene (PE) and polypropylene (PP) materials, radiation irradiation or chemical cross-linking is applied as the cross-linking method.

14. The cap assembly of claim 12, wherein when the insulator is made of any one of polystyrene (PS) and ethylene vinyl acetate copolymer (EVA), a chemical cross-linking method is applied as the cross-linking treatment method.
